# EUROPÄISCHE PATENTSCHRIFT

(11) **EP 0 602 447 B1**
(45) Veröffentlichungstag und Bekanntmachung des Hinweises auf die Patenterteilung: **02.02.2000**
(21) Anmeldenummer: 93119317.1
(22) Anmeldetag: 01.12.1993
(51) Int. Cl.: G02B 6/44

(54) **Optisches Kabel**
Optical cable
Câble optique

(30) Priorität: 16.12.1992 DE 4242510; 22.07.1993 DE 4324574
(43) Veröffentlichungstag der Anmeldung: 22.06.1994
(73) Patentinhaber: ALCATEL, 75008 Paris (FR)
(72) Erfinder: Delâge, Peter, Dipl.-Ing., D-41197 Mönchengladbach (DE); Hög, Georg, Dipl.-Ing., D-41065 Mönchengladbach (DE); Nothofer, Klaus, Dipl.-Ing., D-40699 Erkrath (DE); Zamzow, Peter, Dipl.-Ing., D-44795 Bochum (DE)
(74) Vertreter: Döring, Roger, Dipl.-Ing.

(56) Entgegenhaltungen:
- EP-A- 0 495 241
- DE-A- 2 755 734
- DE-A- 2 930 643
- DE-A- 4 040 715
- DE-A- 4 211 489
- PATENT ABSTRACTS OF JAPAN vol. 7, no. 270 (P-240) 2. Dezember 1983 & JP-A-58 150 905 (NIPPON DENSHIN DENWA KOSHA) 7. September 1983
- PATENT ABSTRACTS OF JAPAN vol. 8, no. 65 (P-263) 27. März 1984 & JP-A-58 211 713 (NIPPON DENSHIN DENWA KOSHA) 9. Dezember 1983
- PATENT ABSTRACTS OF JAPAN vol. 8, no. 65 (P-263) 27. März 1984 & JP-A-58 211 712 (NIPPON DENSHIN DENWA KOSHA) 9. Dezember 1983

## Beschreibung

Die Erfindung betrifft ein optisches Kabel mit einer Mehrzahl von miteinander verseilten Adern, in deren einen kreisringförmigen Querschnitt aufweisenden Hüllen jeweils zumindest ein Lichtwellenleiter-Bändchen angeordnet ist.

Aus der EP-A-0 165 632 ist bereits ein optisches Kabel mit zu Lichtwellenleiter-Bändchen zusammengefaßten Lichtwellenleitern bekannt, bei dem die Lichtwellenleiter-Bändchen zu einem Lichtwellenleiter-Bündel miteinander verbunden sind, das lose und damit nicht lagestabil in einer rohrförmigen Hülle angeordnet ist. Dabei ist das aus Lichtwellenleiter-Bändchen zusammengesetzte Bündel innerhalb der rohrförmigen Hülle um seine Längsachse tordiert.

Bei diesem bekannten Kabel wirken aber hohe Torsions- und Streßbelastungen auf die torsionsempfindlichen Lichtwellenleitfasern, die zu einem Bruch zumindest einzelner Fasern führen können. Durch die Torsion des Lichtwellenleiter-Bündels geht zudem die Orientierung der einzelnen Lichtwellenleiter verloren, so daß die Anwendung der Massenspleißtechnik erschwert wird. Im Vergleich zu den Außenabmessungen des Lichtwellenleiter-Bündels weist die das Lichtwellenleiter-Bündel umgebende rohrförmige Hülle einen wesentlich größeren Durchmesser auf, der sich in vielen Anwendungsfällen nachteilig auswirkt. Das bekannte optische Kabel ist zudem nur auf vergleichsweise aufwendige Art und Weise herstellbar.

In der EP-A-0 495 241 ist ein Lichtwellenleiter-Bändchenkabel mit einer Schar miteinander verseilter Bündeladern und einem diese gemeinsam umschließenden Mantel beschrieben. Zum Aufbau einer Bündelader wird ein Stapel aus parallelen Lichtwellenleiter-Bändchen verwendet, die mit einer schlauchförmigen Umhüllung versehen sind. Zwischen den einzelnen im Stapel übereinander liegenden Schichten aus Lichtwellenleiter-Bändchen ist jeweils eine Lage eines Quellvlieses angeordnet, wobei Quellvlies-Lagen und Lichtwellenleiter-Bändchen gemeinsam einen Schichtenverbund bilden. Die Bündeladern sind mit einem den jeweiligen Schichtenverbund umgebenden Füllmaterial wie einem thixotropen Gel, Glas- und/oder Aramidelementen oder quellfähigem Garn versehen.

Die DE-A-27 55 734 betrifft ein optisches Kabel, das mehrere zu einer rechteckigen Matrixstruktur übereinander gestapelte Bänder aufweist, in deren sechseckigen Kanälen jeweils ein Lichtwellenleiter angeordnet ist. Auf jede Seite der Matrixstruktur ist ein Streifen aus einem zusammendrückbaren Material aufgebracht. Durch spiralförmiges Umwickeln mit einem Papier- oder Kunststoffband wird das Streifenmaterial entsprechend zusammengedrückt und eine kreisförmige Elementarstruktur hergestellt, die beim Aufwickeln auf eine Trommel verdrallt wird.

Ausgehend von diesem Stand der Technik liegt der Erfindung das Problem zugrunde, ein optisches Kabel so auszubilden, daß die Lichtwellenleiter möglichst geringen mechanischen Belastungen ausgesetzt sind und daß das Kabel mit geringem Fertigungsaufwand sowie kleinen äußeren Abmessungen herstellbar ist.

Dieses Problem wird erfindungsgemäß durch die im Kennzeichen des Anspruchs 1 erfaßten Merkmale gelöst.

Die mit der Erfindung erzielbaren Vorteile bestehen insbesondere darin, daß ein solches optisches Kabel auf einfache und kostengünstige Art und Weise hergestellt werden kann. Die Verseilung der Adern, in denen die Lichtwellenleiter-Bändchen in ihrer jeweiligen Hülle in einer Kunststoffmasse eingebettet und in ihrer Lage festgelegt sind, ermöglicht es, die Lichtwellenleitfasern nahezu frei von Torsions- und Streßbelastungen zu halten und so einen Bruch der torsionsempfindlichen Fasern zu verhindern. Bei der Verseilung der Adern geht die Orientierung der Lichtwellenleiter-Bändchen in den rohrförmigen Hüllen nicht verloren, so daß sich das erfindungsgemäße optische Kabel gut für den Einsatz der Massenspleißtechnik eignet. Zudem ist das Kabel durch die hohe Packungsdichte vergleichsweise kompakt. Der durch die Erfindung ermöglichte kleine Durchmesser der Adern erlaubt deren problemlose Verseilung zu einem optischen Kabel.

Durch die in den Unteransprüchen aufgeführten Maßnahmen sind vorteilhafte Weiterbildungen und Verbesserungen der Erfindung möglich.

Besonders vorteilhaft ist es, wenn in zumindest einer Hülle eine Mehrzahl von Lichtwellenleiter-Bändchen angeordnet ist, die durch die Kunststoffmasse kraftschlüssig miteinander verbunden sind. Auf diese Weise bilden die Lichtwellenleiter-Bändchen eine Einheit, in der die Lichtwellenleiter bei Verseilung der Adern nahezu frei von Torsions- und Streßbelastungen sind und zu Montagezwecken leicht voneinander getrennt werden können.

Um standardisierte Abmessungen der Adern bei verschiedenen Anzahlen und Anordnungen von Lichtwellenleitern zu ermöglichen und die Lage der Lichtwellenleiter-Bändchen in der jeweiligen Hülle schon vor dem Ausfüllen der Hülle mit der Kunststoffmasse festzulegen, ist es vorteilhaft, wenn in der Hülle zumindest ein sich parallel zu den Lichtwellenleiter-Bändchen erstreckendes Füllelement angeordnet ist.

Dabei ist es von Vorteil, wenn in der Hülle zwei sich parallel zueinander erstreckende Füllelemente angeordnet sind.

Für die Festigkeit des erfindungsgemäßen optischen Kabels ist es von Vorteil, wenn zumindest ein Füllelement als Zugelement und/oder als Stützelement ausgebildet ist.

Von Vorteil ist es, wenn das zumindest eine Lichtwellenleiter-Bändchen und das zumindest eine Füllelement durch die Kunststoffmasse kraftschlüssig miteinander verbunden sind. Auf diese Weise ist eine kompakte und mechanisch stabile Einheit gebildet, die relativ zu der umgebenden Hülle der Ader nur in engen Grenzen bewegbar ist und deren Lichtwellenleiter auf diese Weise vor mechanischen Beschädigungen gut geschützt sind.

Ausführungsbeispiele der Erfindung sind in der Zeichnung vereinfacht dargestellt und in der nachfolgenden Beschreibung näher erläutert. Es zeigen Fig. 1 ein erfindungsgemäßes optisches Kabel, Fig. 2 eine Ader des optischen Kabels gemäß eines ersten Ausführungsbeispiels, sowie die Figuren 3 bis 5 Adern von erfindungsgemäßen optischen Kabeln gemäß weiterer Ausführungsbeispiele.

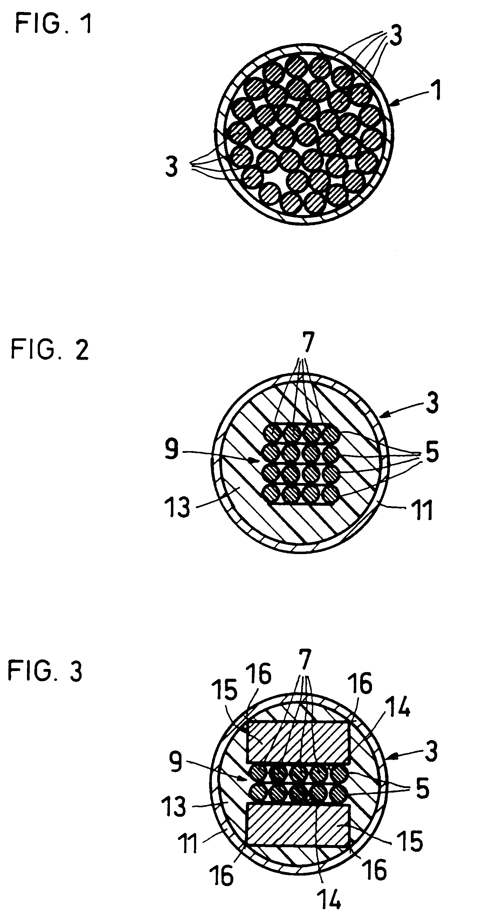

In der Fig. 1 ist beispielsweise ein erfindungsgemäß ausgebildetes optisches Kabel 1 dargestellt, wie es z. B. zum Zwecke der Nachrichtenübertragung eingesetzt wird. Das optische Kabel 1 weist eine Vielzahl von miteinander verseilten Adern 3 auf. Wie in der Fig. 2 dargestellt ist, die einen Schnitt durch eine Ader 3 eines erfindungsgemäßen optischen Kabels 1 gemäß eines ersten Ausführungsbeispieles zeigt, ist in jeder der Adern 3 mindestens ein Lichtwellenleiter-Bändchen 5 angeordnet, das aus mehreren parallel zueinander verlaufenden, in einer Ebene flach nebeneinander angeordneten und miteinander verbundenen Lichtwellenleitern 7 besteht. In der Ader 3 des ersten Ausführungsbeispiels sind z. B. vier mit ihren Breitseiten stapelförmig übereinander angeordnete Lichtwellenleiter-Bändchen 5 vorgesehen, die gemeinsam ein einen etwa quadratischen Querschnitt aufweisendes, sogenanntes Lichtwellenleiter-Bündel 9 bilden. Dieses Lichtwellenleiter-Bündel 9 verläuft in einer Ebene in einer rohrförmigen, einen kreisringförmigen Querschnitt aufweisenden und die äußere Umhüllung der Ader 3 bildenden Hülle 11, ohne um seine Längsachse tordiert zu sein. Der Zwischenraum zwischen dem im Querschnitt beispielsweise etwa quadratischen Lichtwellenleiter-Bündel 9 und der inneren Wandung der Hülle 11 kreisringförmigen Querschnitts ist mit einer Kunststoffmasse 13 ausgefüllt. Das Lichtwellenleiter-Bündel 9 ist dabei z. B. so in der rohrförmigen Hülle 11 angeordnet, daß das Lichtwellenleiter-Bündel von der vergleichsweise festen Kunststoffmasse 13 vollständig umschlossen ist und die Lichtwellenleiter-Bändchen 5 miteinander kraftschlüssig verbunden sind. An keiner Stelle berührt das Lichtwellenleiter-Bündel 9 bei dem ersten Ausführungsbeispiel die innere Wandung der Hülle 11. Die Kunststoffmasse 13 wirkt als Pufferelement zwischen dem Lichtwellenleiter-Bündel 9 und der rohrförmigen Hülle 11 und fixiert die Lage des Lichtwellenleiter-Bündels 9 in der Hülle 11. Trotz der Verseilung der Adern 3 zu dem optischen Kabel 1 wird eine Torsions- und Streßbelastung der die Lichtwellenleiter 7 bildenden Fasern weitgehend vermieden. Es ist ebenfalls möglich, daß Hülle 11 und Kunststoffmasse 13 kraftschlüssig miteinander verbunden sind.

Bei dem in der Figur 2 dargestellten ersten Ausführungsbeispiel hat die einen kreisringförmigen Querschnitt aufweisende Hülle 11 beispielsweise einen Innendurchmesser von 2 bis 3 mm und das verwendete Lichtwellenleiter-Bündel eine Kantenlänge von etwa 1 bis 2 mm. Hierdurch ergeben sich sehr kompakte Abmessungen des vieladrigen optischen Kabels 1. Der kreisförmige Querschnitt und der geringe Durchmesser der z. B. jeweils ein in seiner Lage fixiertes Lichtwellenleiter-Bündel 9 aufweisenden Adern 3 ermöglichen eine problemlose Verseilung der Adern zu dem erfindungsgemäßen optischen Kabel 1.

Die Fig. 3 zeigt eine Ader 3 eines optischen Kabels gemäß eines zweiten erfindungsgemäßen Ausführungsbeispiels. Bei diesem zweiten Ausführungsbeispiel sind in der rohrförmigen, einen kreisringförmigen Querschnitt aufweisenden Hülle 11 zwei mit ihren Breitseiten übereinander liegende Lichtwellenleiter-Bändchen 5 angeordnet, die gemeinsam ein Lichtwellenleiter-Bündel 9 bilden. An der dem jeweils anderen Lichtwellenleiter-Bändchen 5 abgewandten Breitseite ist beispielsweise an den Lichtwellenleiter-Bändchen 5 mit einer Anlagefläche 14 anliegend jeweils ein sich parallel zu den in einer Ebene verlaufenden, nicht um ihre Längsachse tordierten Lichtwellenleiter-Bändchen 5 erstreckendes, langgestrecktes Füllelement 15 angeordnet. Die Füllelemente 15 weisen beispielsweise einen rechteckigen Querschnitt auf, liegen z. B. mit ihren den Lichtwellenleiter-Bändchen 5 abgewandten Kanten 16 an der inneren Wandung der rohrförmigen Hülle 11 an und verlaufen in Längsrichtung der Hülle 11 parallel zueinander und parallel zu dem Lichtwellenleiter-Bündel 9. Das Lichtwellenleiter-Bündel 9 und die beiden Füllelemente 15 sind in der den freien Querschnitt der rohrförmigen Hülle 11 zwischen den Lichtwellenleiter-Bändchen 5 und der inneren Wandung der Hülle 11 bzw. zwischen den Füllelementen 15 und der inneren Wandung der Hülle 11 ausfüllenden, festen Kunststoffmasse 13 eingebettet und so in ihrer Lage zueinander und gegenüber der Hülle 11 fixiert. Bei geeigneter Werkstoffwahl für die Kunststoffmasse 13 sind zudem sowohl durch ihr Eindringen in zwischen den Lichtwellenleiter-Bändchen 5 gebildete Zwickel die Lichtwellenleiter-Bändchen 5 miteinander als auch die Füllelemente 15 und die Lichtwellenleiter-Bändchen 5 miteinander verklebt und auf diese Weise kraftschlüssig miteinander verbunden.

Die Füllelemente 15 können als Zugelemente oder als Stützelemente ausgebildet sein, um die Festigkeit der Adern 3 des optischen Kabels 1 zu erhöhen.

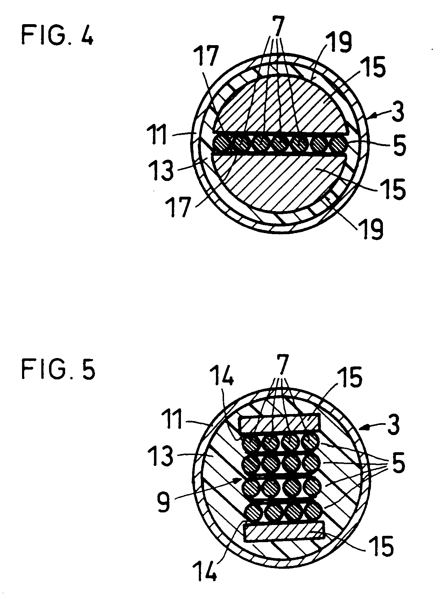

Das in der Figur 4 dargestellte dritte Ausführungsbeispiel einer Ader 3 eines erfindungsgemäßen optischen Kabels unterscheidet sich von dem in der Fig. 3 dargestellten zweiten Ausführungsbeispiel im wesentlichen dadurch, daß statt zwei Lichtwellenleiter-Bändchen lediglich ein Lichtwellenleiter-Bändchen 5 in der einen kreisringförmigen Querschnitt aufweisenden Hülle 11 vorgesehen ist. An die Breitseiten des Lichtwellenleiter-Bändchens 5 angrenzend sind in der Hülle 11 zwei langgestreckte Füllelemente 15 angeordnet, die einen z. B. etwa halbkreisförmigen Querschnitt aufweisen. Mit ihren ebenen Flächen 17 liegen die Füllelemente 15 an den Breitseiten des in einer Ebene verlaufenden Lichtwellenleiter-Bändchens 5 an und sind mit ihren gerundeten Flächen 19 der inneren Wandung der einen kreisringförmigen Querschnitt aufweisenden Hülle 11 zugewandt. Dabei sind die Abmessungen der Füllelemente 15 beispielsweise so gewählt, daß sich zwischen den gerundeten Flächen 19 der Füllelemente 15 und der inneren Wandung der Hülle 11 ein kreisringförmiger Spalt ergibt. Das Lichtwellenleiter-Bändchen 5 und die Füllelemente 15 sind in der Hülle 11 in die Kunststoffmasse 13 eingebettet, die die Lage des Lichtwellenleiter-Bändchens 5 und der Füllelemente 15 zueinander festlegt und dabei z. B. das Lichtwellenleiter-Bändchen 5 und die Füllelemente 15 kraftschlüssig miteinander verbindet.

Auch das in der Fig. 5 dargestellte vierte Ausführungsbeispiel einer Ader 3 eines erfindungsgemäßen optischen Kabels unterscheidet sich nur geringfügig von dem in der Fig. 3 dargestellten zweiten Ausführungsbeispiel. Das Lichtwellenleiter-Bündel 9 besteht aus z. B. vier parallel zueinander, mit ihren Breitseiten übereinanderliegend angeordneten und in einer Ebene verlaufenden Lichtwellenleiter-Bändchen 5. Zwei langgestreckte Füllelemente 15 liegen mit ihrer jeweiligen Anlagefläche 14 an den den anderen Lichtwellenleiter-Bändchen 5 abgewandten Breitseiten der äußeren Lichtwellenleiter-Bändchen 5 an und erstrecken sich parallel zu diesen in der rohrförmigen Hülle 11. Dabei sind die Füllelemente 15 beispielsweise rechteckförmig ausgebildet. Die Füllelemente 15 und das Lichtwellenleiter-Bündel 9 sind in der Hülle 11 in die Kunststoffmasse 13 eingebettet und so das Lichtwellenleiter-Bündel 9 und die Füllelemente 15 durch kraftschlüssige Verbindungen in ihrer Lage zueinander und in der Hülle 11 fixiert.

## Patentansprüche

1. Optisches Kabel, (1) mit einer Mehrzahl von miteinander verseilten Adern (3), in deren einen kreisringförmigen Querschnitt aufweisenden Hüllen (11) jeweils zumindest ein Lichtwellenleiter-Bändchen (5) angeordnet ist, dadurch gekennzeichnet, daß mehrere Lichtwellenleiter-Bändchen (5) oder ein oder mehrere Lichtwellenleiter-Bändchen (5) zusammen mit zumindest einem sich parallel zu dem/den Lichtwellenleiter-Bändchen (5) erstreckenden Füllelement (15) in ihrer jeweiligen Hülle (11) in eine die Hülle (11) ausfüllende Kunststoffmasse (13) eingebettet und durch eine kraftschlüssige Verbindung mit der Kunststoffmasse (13) in ihrer Lage festgelegt sind.

2. Optisches Kabel nach Anspruch 1, dadurch gekennzeichnet, daß in der wenigstens einen Hülle (11) zumindest zwei sich parallel zueinander erstreckende Füllelemente (15) angeordnet sind.

3. Optisches Kabel nach Anspruch 1 oder 2, dadurch gekennzeichnet, daß zumindest ein Füllelement (15) als Zugelement ausgebildet ist.

4. Optisches Kabel nach einem der Ansprüche 1 bis 3, dadurch gekennzeichnet, daß zumindest ein Füllelement (15) als Stützelement ausgebildet ist.

5. Optisches Kabel nach einem der Ansprüche 1 bis 4, dadurch gekennzeichnet, daß in der wenigstens einen Hülle (11) das oder die Lichtwellenleiter-Bändchen (5) und das oder die Füllelement(e) (15) durch die Kunststoffmasse (13) kraftschlüssig miteinander verbunden sind.

## Claims

1. An optical cable (1) with a plurality of cores (3) stranded together, in whose sleeves (11) of circular cross section at least one lightwave guide strip (5) is arranged in each case, characterised in that a plurality of lightwave guide strips (5) or one or more lightwave guide strips (5) together with at least one filler element (15) extending parallel to the lightwave guide strip(s) (5) are embedded in their respective sleeve (11) in a plastics material compound (13) filling the sleeve (11) and are fixed in their position by a non-positive locking connection with the plastics material compound (13).

2. An optical cable according to claim 1, characterised in that at least two filler elements (15) extending parallel to one another are arranged in the at least one sleeve (11).

3. An optical cable according to claim 1 or 2, characterised in that at least one filler element (15) is constructed as a tension element.

4. An optical cable according to one of claims 1 to 3, characterised in that at least one filler element (15) is constructed as a support element.

5. An optical cable according to one of claims 1 to 4, characterised in that the lightwave guide strip or strips (5) and the filler element or elements (15) are connected to one another in a non-positive locking manner in the at least one sleeve (11) by the plastics material compound (13).

## Revendications

1. Câble optique (1) composé de plusieurs brins toronnés (3), dont chacun comporte une gaine (11) de section circulaire contenant au moins une bande de guides d'ondes optiques (5), et caractérisé par la présence d'une ou plusieurs bandes de guides d'ondes optiques (5), et au moins un élément de remplissage (15)positionné parallèlement à la bande de guides d'ondes optiques (5) le tout étant englobé dans une masse en matériau synthétique (13) déposée à l'intérieur d'une gaine (11), ces éléments sont arrêtés en position par leur maintien dans la masse en matériau synthétique (13).

2. Câble optique conformément à la revendication 1, et caractérisé par le fait qu'au moins une des gaines (11) contient au moins deux éléments de remplissage (15) disposés parallèlement entre eux.

3. Câble optique conformément à la revendication 1, et caractérisé par le fait qu'au moins un élément de remplissage (15) est conçu en tant qu'élément de traction.

4. Câble optique conformément à l'une des revendications 1 à 3, et caractérisé par le fait qu'au moins un élément de remplissage (15) est conçu comme un élément support.

5. Câble optique conformément à l'une des revendications 1 à 4, et caractérisé par le fait qu'au moins dans une gaine (11) le ou les bande(s) de guides d'ondes optiques (5) et le ou les élément(s) de remplissage (15) sont liés mécaniquement ensemble par la masse en matériau synthétique (13).
